(19) Europäisches Patentamt
European Patent Office
Office européen des brevets

(11) **EP 3 529 552 B1**

(12) **EUROPÄISCHE PATENTSCHRIFT**

(45) Veröffentlichungstag und Bekanntmachung des Hinweises auf die Patenterteilung:
**06.10.2021 Patentblatt 2021/40**

(51) Int Cl.:
***G01B 7/00*** *(2006.01)*

(21) Anmeldenummer: **17768377.8**

(86) Internationale Anmeldenummer:
**PCT/EP2017/071673**

(22) Anmeldetag: **29.08.2017**

(87) Internationale Veröffentlichungsnummer:
**WO 2018/077513 (03.05.2018 Gazette 2018/18)**

(54) **VERFAHREN UND VORRICHTUNG ZUM BESTIMMEN EINER POSITION EINES BEWEGLICHEN OBJEKTS SOWIE SYSTEM UMFASSEND DIE VORRICHTUNG**

METHOD AND DEVICE FOR DETERMINING A POSITION OF A MOVABLE OBJECT AND SYSTEM COMPRISING THE DEVICE

PROCÉDÉ ET DISPOSITIF POUR DÉTERMINER UNE POSITION D'UN OBJET MOBILE AINSI QUE SYSTÈME COMPRENANT LE DISPOSITIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.10.2016 DE 102016120250**

(43) Veröffentlichungstag der Anmeldung:
**28.08.2019 Patentblatt 2019/35**

(73) Patentinhaber: **Fraunhofer-Gesellschaft zur Förderung der angewandten Forschung e.V.
80686 München (DE)**

(72) Erfinder:
• **PSIUK, Rafael
91058 Erlangen (DE)**
• **HARTMANN, Markus
92237 Sulzbach-Rosenberg (DE)**
• **DRÄGER, Tobias
91083 Baiersdorf (DE)**

(74) Vertreter: **2SPL Patentanwälte PartG mbB
Postfach 15 17 23
80050 München (DE)**

(56) Entgegenhaltungen:
CN-A- 105 222 772     US-A1- 2010 022 904
US-A1- 2010 271 012     US-A1- 2014 266 164
US-B1- 6 316 934     US-B1- 6 789 043
US-B2- 7 139 582

**Beschreibung**

**Technisches Gebiet**

Ausführungsbeispiele befassen sich mit der Positionsbestimmung von beweglichen Objekten. Insbesondere befassen sich Ausführungsbeispiele mit einem Verfahren zum Bestimmen einer Position eines beweglichen Objekts, einer Vorrichtung zum Bestimmen einer Position eines beweglichen Objekts sowie einem System, das die vorgenannte Vorrichtung umfasst.

**Hintergrund**

In vielen Anwendungsgebieten ist es erforderlich die Position eines beweglichen Objekts zu kennen bzw. diese bestimmen zu können.

In der Logistik kann es beispielsweise erforderlich sein, den Eingriffsort eines Kommissionierers in ein Regal zu kennen bzw. zu bestimmen. Derart kann eine Kontrolle erfolgen, ob der Kommissionierer Ware aus dem richtigen Regalfach genommen bzw. in welches Regalfach er Ware abgelegt hat.

Die Bestimmung einer Position eines beweglichen Objekts kann auch im Sportbereich erforderlich sein, um z. B. die Position eines Spielgeräts zu kennen bzw. zu bestimmen. Beispielsweise kann es erforderlich sein, zu bestimmen, ob ein Ball bzw. ein Puck eine Torlinie überquert hat oder ob sich ein Spieler in einem bestimmten Bereich des Spielfelds aufhält (z.B. um ein Torraumabseits beim Eishockey zu erkennen).

Ebenso kann die Position eines beweglichen Objekts bei der Erzeugung virtueller Realitäten erforderlich sein, um eine Position, eine Orientierung bzw. eine Bewegung eines Nutzers in der realen Umgebung zu erfassen und diese bei der Darstellung der virtuellen Realität zu berücksichtigen.

Verfahren zur Positionsbestimmung von Objekten werden beispielsweise in den Druckschriften EP 2 813 114 A1, US 2014/266164 A1, US 2010/022904 A1, US 6 789 043 B1, US 7 139 582 B2, US 6 316 934 B1, CN 105 222 772 A und US 2010/271012 A1 beschrieben.

Es besteht ein Bedürfnis, eine weitere Möglichkeit zur Positionsbestimmung eines beweglichen Objekts bereitzustellen.

**Zusammenfassung**

Ausführungsbeispiele eines Verfahrens zum Bestimmen einer Position eines beweglichen Objekts ermöglichen dies. Das Verfahren gemäß dem unabhängigen Verfahrensanspruch 1 umfasst ein Erzeugen eines elektromagnetischen Erregerfeldes. Das elektromagnetische Erregerfeld ist dabei eingerichtet, das bewegliche Objekt zum Ausprägen eines magnetischen Antwortfeldes anzuregen. Ferner umfasst das Verfahren ein Bestimmen einer Mehrzahl an Messwerten für das magnetische Antwortfeld durch Messen des magnetischen Antwortfeldes an einer Mehrzahl an vorbestimmten Messpositionen. Weiterhin umfasst das Verfahren ein Bestimmen der Position des beweglichen Objekts basierend auf einem Vergleich der Mehrzahl an Messwerten mit Referenzmesswerten. Den Referenzmesswerten ist dabei jeweils eine Position des beweglichen Objekts zugeordnet. Ferner sind die Referenzmesswerte jeweils durch eine Simulation bestimmt.

Weitere Ausführungsbeispiele betreffen eine Vorrichtung zum Bestimmen einer Position eines beweglichen Objekts. Die Vorrichtung gemäß dem unabhängigen Vorrichtungsanspruch 19 umfasst dabei ein Erregermodul, das eingerichtet ist, ein elektromagnetisches Erregerfeld zu erzeugen. Das elektromagnetische Erregerfeld ist dabei eingerichtet, das bewegliche Objekt zum Ausprägen eines magnetischen Antwortfeldes anzuregen. Ferner umfasst die Vorrichtung ein Messmodul, das eingerichtet ist, eine Mehrzahl an Messwerten für das magnetische Antwortfeld durch Messen des magnetischen Antwortfeldes an einer Mehrzahl an vorbestimmten Messpositionen zu bestimmen. Die Vorrichtung umfasst weiterhin ein Auswertemodul, das eingerichtet ist, die Position des beweglichen Objekts basierend auf einem Vergleich der Mehrzahl an Messwerten mit Referenzmesswerten zu bestimmen. Den Referenzmesswerten ist dabei jeweils eine Position des beweglichen Objekts zugeordnet. Ferner sind die Referenzmesswerte jeweils durch eine Simulation bestimmt.

Zudem betreffen weitere Ausführungsbeispiele ein System gemäß dem Anspruch 20, das zumindest ein bewegliches Objekt und vorgenannte Vorrichtung zum Bestimmen einer Position eines beweglichen Objekts umfasst. Das bewegliche Objekt ist dabei eingerichtet, als Reaktion auf ein elektromagnetisches Erregerfeld ein magnetisches Antwortfeld auszuprägen.

**Figurenkurzbeschreibung**

Ausführungsbeispiele werden nachfolgend bezugnehmend auf die beiliegenden Figuren näher erläutert. Es

EP 3 529 552 B1

zeigen:

Fig. 1 zeigt ein Ablaufdiagramm eines Ausführungsbeispiels eines Verfahrens zum Bestimmen einer Position eines beweglichen Objekts;

Figs. 2a und 2b zeigen ein Ausführungsbeispiel einer Approximation einer Leiterschleife;

Fig. 3 zeigt ein Ausführungsbeispiel eines Systems mit einem beweglichen Objekt und einer Vorrichtung zum Bestimmen einer Position des beweglichen Objekts;

Fig. 4 zeigt ein weiteres Ausführungsbeispiel eines Systems mit einem beweglichen Objekt und einer Vorrichtung zum Bestimmen einer Position des beweglichen Objekts aus dem Bereich der Logistik; und

Fig. 5 zeigt ein noch weiteres Ausführungsbeispiel eines Systems mit einem beweglichen Objekt und einer Vorrichtung zum Bestimmen einer Position des beweglichen Objekts aus dem Bereich des Sports.

**Beschreibung**

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.
Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.
Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.
Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können.
Die Terminologie, die hierin verwendet wird, dient nur der Beschreibung bestimmter Ausführungsbeispiele und soll die Ausführungsbeispiele nicht beschränken. Wie hierin verwendet, sollen die Singularformen " einer", " eine", "eines" und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", aufweist" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.
Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, solange dies hierin nicht ausdrücklich anders definiert ist.

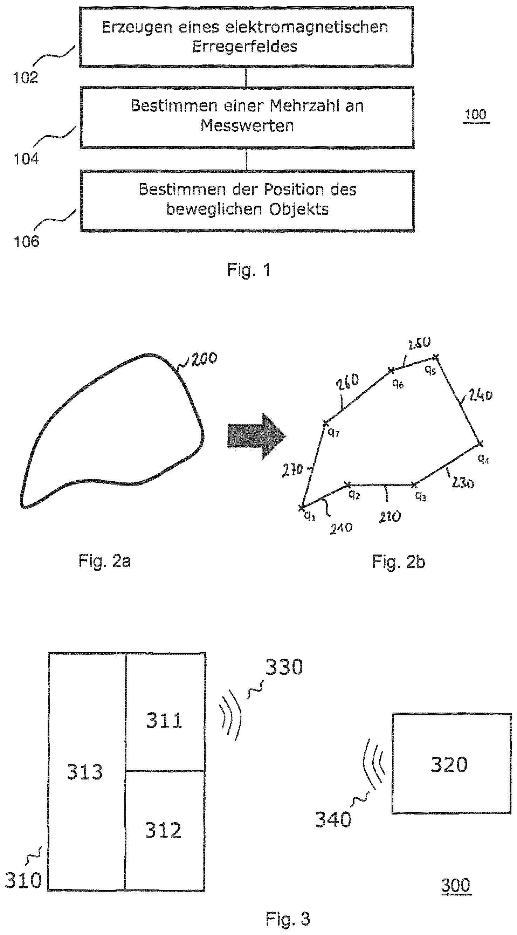

**Fig. 1** zeigt ein Verfahren 100 zum Bestimmen einer Position eines beweglichen Objekts. Das Verfahren 100 umfasst ein Erzeugen 102 eines elektromagnetischen Erregerfeldes. Das elektromagnetische Erregerfeld ist dabei eingerichtet, das bewegliche Objekt zum Ausprägen eines magnetischen Antwortfeldes anzuregen. Ferner umfasst das Verfahren 100 ein Bestimmen 104 einer Mehrzahl an Messwerten für das magnetische Antwortfeld durch Messen des magnetischen Antwortfeldes an einer Mehrzahl an vorbestimmten Messpositionen. Weiterhin umfasst das Verfahren 100 ein Bestimmen 106 der Position des beweglichen Objekts basierend auf einem Vergleich der Mehrzahl an Messwerten mit Referenzmesswerten. Den Referenzmesswerten ist dabei jeweils eine Position des beweglichen Objekts zugeordnet. Ferner sind die Referenzmesswerte jeweils durch eine Simulation bestimmt.

Das Verfahren 100 kann eine Lokalisierung des beweglichen Objekts in Echtzeit ermöglichen. Aufgrund der Bestimmung der Referenzmessewerte durch eine Simulation können sowohl ein Zeitaufwand als auch eine Komplexität für das Erzeugen der Referenzmesswerte reduziert sein. Insbesondere kann auf Änderungen der Umgebung bzw. des beweglichen Objekts durch eine Aktualisierung der Referenzmesswerte mittels einer angepassten Simulation schnell und mit lediglich geringem Aufwand reagiert werden. Komplexe Messungen zur Bestimmung der Referenzmesswerte können vermieden werden.

Bei dem beweglichen Objekt kann es sich um jegliches Objekt handeln, dass sich im Raum bewegen und als Reaktion auf ein elektromagnetisches Erregerfeld ein magnetisches Antwortfeld ausprägen bzw. erzeugen kann. Beispielsweise kann das bewegliche Objekt eine Spule bzw. ein Spulensystem sein oder ein solches umfassen. Bei dem beweglichen Objekt kann es sich beispielsweise um ein Kleidungsstück (z.B. Schuh, Jacke, Hose, Hemd, Handschuh, Kopfbedeckung), ein Accessoire (z.B. Kette, Armband, Gürtel, Brille), ein Sportgerät (z.B. Ball, Puck, Kugel, Football) oder eine Sportausrüstung (z.B. Helm, Handschuh, Sportschuh, Schläger, Schutzausrüstung) handeln, die eine Komponente (Element, Vorrichtung) umfasst, welche als Reaktion auf ein elektromagnetisches Erregerfeld ein magnetisches Antwortfeld ausprägen bzw. erzeugen kann. Beispielsweise kann das bewegliche Objekt ein Armband, ein Ball, ein Puck, ein Handschuh, ein Schuh, oder ein Sportschuh sein, das/der eine Spule bzw. ein Spulensystem umfasst.

Das elektromagnetische Erregerfeld kann jedes elektromagnetische Feld sein, welches das bewegliche Objekt zum Ausprägen eines magnetischen Antwortfeldes anregen kann. Beispielsweise kann es sich bei dem elektromagnetischen Erregerfeld um ein magnetisches Wechselfeld handeln. Ein magnetisches Wechselfeld kann beispielsweise mittels wechselstromdurchflossener Spulen oder Leiterschleifen erzeugt werden. Das elektromagnetische Erregerfeld kann dabei eine oder mehrere Frequenzkomponenten umfassen. Auch kann eine Frequenz des elektromagnetischen Erregerfelds variieren.

Die Mehrzahl an Messwerten für das magnetische Antwortfeld repräsentieren Zustände des magnetischen Antwortfeldes an der Mehrzahl an vorbestimmten Messpositionen. Beispielsweise kann die Mehrzahl an Messwerten die jeweilige Stärke des Antwortfeldes an der Mehrzahl an vorbestimmten Messpositionen angeben. Die Mehrzahl an vorbestimmten Messpunkten umfasst zwei oder mehr bekannte Messpunkte für das magnetische Antwortfeld. Basierend auf einer gewünschten Dimension oder einer gewünschten Genauigkeit der zu bestimmenden Position des beweglichen Objekts kann die Anzahl der Messpunkte gewählt werden. Beispielsweise kann das magnetische Antwortfeld an zwei, drei, vier, fünf oder mehr verschiedenen Positionen gemessen werden. Um das magnetische Antwortfeld zu messen, können z.B. oder eine oder mehrere Empfangsantennen an einer Messposition angeordnet sein. Eine in der Empfangsantenne induzierte Spannung ist dabei proportional zur lokalen Stärke des magnetischen Antwortfeldes an der Messposition.

Der Vergleich der Mehrzahl an Messwerten mit Referenzmesswerten kann z.B. durch einen Vergleich der Messwerte mit in einer Tabelle gespeicherten Referenzmesswerten erfolgen. Dazu kann z.B. eine Ähnlichkeit oder Übereinstimmung zwischen einem Messwert und den Referenzmesswerten bestimmt werden. Basierend auf den Vergleichsergebnissen kann beispielsweise die einem Referenzwert zugeordnete Position des beweglichen Objekts als Position des beweglichen Objekts bestimmt werden, oder eine Kombination von mehreren den Referenzmesswerten zugeordneten Positionen des beweglichen Objekts kann als Position des beweglichen Objekts bestimmt werden. Ein Referenzwert und dessen zugeordnete Position des beweglichen Objekts können z.B. als Zweier-Tupel in einer Tabelle gespeichert sein. Entsprechend kann der Vergleich der Mehrzahl an Messwerten mit Referenzmesswerten z.B. ein Durchsuchen einer Tabelle umfassen.

Da die Referenzmessewerte jeweils durch eine Simulation bestimmt sind, können sowohl ein Zeitaufwand als auch eine Komplexität für das Erzeugen der Referenzmesswerte reduziert sein. Komplexe Messungen zur Bestimmung der Referenzmesswerte können vermieden werden. Ebenso können aktualisierte Referenzwerte durch eine Anpassung der Simulation bzw. von Simulationsparametern erzeugt werden.

In einigen Ausführungsbeispielen kann den Referenzmesswerten ferner jeweils auch eine Orientierung des beweglichen Objekts zugeordnet sein. Dies kann es ermöglichen, neben der Position des beweglichen Objekts auch eine Orientierung des beweglichen Objekts zu bestimmen. Die Lage des beweglichen Objekts im Raum kann dadurch genauer bestimmt werden. Durch die Verwendung einer Simulation kann die Bestimmung der Referenzmesswerte erheblich vereinfacht sein, da Änderungen der Orientierung des Objekts lediglich eine Anpassung der Simulationsparameter erfordern. Komplexe Messungen zur Bestimmung der Referenzmesswerte für verschiedene Orientierungen können dadurch vermieden werden.

Beispielsweise kann in einigen Ausführungsbeispielen einer der Referenzmesswerte durch die Simulation basierend auf einer Geometrie eines Erregersystems, welches zum Erzeugen des elektromagnetischen Erregerfeldes verwendet wird, und/oder einer Geometrie eines Antwortsystems, welches zum Aussenden des magnetischen Antwortfeldes verwendet wird, und/oder einer Geometrie eines Messsystems, welches zum Messen des magnetischen Antwortfeldes verwendet wird, und/oder einer Impedanz des Antwortsystems bestimmt sein. Die Geometrien (Aufbauten, Strukturen) des Erregersystems, des Antwortsystems und des Messsystems als auch die Impedanz des Antwortsystems bestimmen wesentlich die Eigenschaften des magnetischen Antwortfeldes an der Mehrzahl an Messpunkten. Die Kenntnis der vorgenannten Parameter kann daher eine genaue bzw. detaillierte Simulation des magnetischen Antwortfeldes ermöglichen. Entsprechend können realitätsnahe Referenzmesswerte für die Positionsbestimmung des beweglichen Objekts generiert werden.

Die Grundlage für den Vergleich kann z.B. eine Fingerabdrucktabelle mit den Referenzmesswerten bilden. Die Referenzmesswerte bilden dabei den charakteristischen "Fingerabdruck" des beweglichen Objekts an einer bestimmten Position bzw. bei einer bestimmten Orientierung im Raum. Die Basis für eine fingerabdruckbasierte Lokalisierung kann daher eine Tabelle sein, welche jeder Position und/oder Orientierung messbare Eigenschaften zuordnet. Diese Tabelle wird im Vorfeld erstellt. Im Falle der hier vorgestellten Technologie kann die Tabelle beispielsweise die dreidimensionale Position eines Spulensystems im Raum sowie optional dessen Orientierung beinhalten. Diesem Positions- und Orientierungstupel des Spulensystems können z.B. die dazugehörigen in Empfangsantennen (welche das Messsystem bilden) gemessenen Feldstärken des Sekundärfeldes (d.h. des magnetischen Antwortfeldes) zugeordnet sein. Traditionell werden Fingerabdrucktabellen eingemessen. Hierzu sind jedoch sehr zeitaufwendige und komplexe Messunterfangen nötig, welche für jede sich ändernde Konfiguration des Systems neu durchgeführt werden müssten. Der Vorteil des hier vorgestellten Verfahrens ist die simulative Erstellung der Fingerabdrucktabelle. Hier können für eine bekannte Konfiguration der Erregerspule des Primärfeldes (d.h. für das Erregersystem des elektromagnetischen Erregerfeldes), des Spulensystems (d.h. des Antwortsystems) und der Empfangsantennen (d.h. des Messsystems) lediglich dessen Konfigurationsparameter in einer Simulationssoftware eingetragen werden und die Simulationssoftware erstellt automatisch eine Fingerabdrucktabelle. Die Parameter sind beispielsweise die geometrischen Formen des Exciters (d.h. für das Erregersystems), der Spulen sowie der Empfangsantennen. Zudem kann die Impedanz der Spule für die Simulation berücksichtigt werden.

Die Berechnung des Primärfeldes (d.h. des elektromagnetischen Erregerfeldes) kann beispielsweise über das magnetische Vektorpotential $\vec{A}(P)$ am Ort P gemäß den nachfolgenden Formeln (1) und (2) erfolgen:

$$\vec{A_i}(\vec{r_P}) = \frac{\mu_0 I}{4\pi} \cdot (\overrightarrow{q_{i+1}} - \vec{q_i}) \int_0^1 \frac{1}{r(\overrightarrow{x_i(t)})} dt \qquad (1)$$

$$\vec{A}(P) = N \cdot \sum_{i=0}^n \vec{A_i}(P) \qquad (2)$$

Wie in den **Figs. 2a und 2b** dargestellt, kann z.B. eine beliebige stromführende Leiterschleife 200 (welche als Exciter bzw. Erregersystem dient) in beliebig viele kleine gerade Leiterstücke 210, 220, 230, 240, 250, 260, 270 aufgeteilt, um so beliebig geformte Leiter zu approximieren. Auf jedes einzelne Leiterstück 210, 220, 230, 240, 250, 260, 270 kann nun Formel (1) angewendet werden. Die Summe der einzelnen Beiträge ergibt dann gemäß Formel (2) das gesamte magnetische Vektorpotential $\vec{A}(P)$ am Ort *P*.

Um nun die in einer beliebig geformten, beliebig orientierten und beliebig positionierten Spule im Raum induzierte Spannung auf Grund eines primären Wechselfeldes (d.h. des elektromagnetischen Erregerfeldes) berechnen zu können, kann das gemäß Formel (2) berechnete magnetische Vektorpotential gemäß der nachfolgenden Formel (3) über die Kontur der Spule integriert werden:

$$U_{ind} = -N \cdot 2\pi f \cdot \oint_{\partial F} \vec{A} \cdot d\vec{s} \qquad (3)$$

Auch hier können bei Bedarf Approximationen der Spule durch gerade Leiterstücke zum Einsatz kommen. *N* stellt hierbei die Windungszahl der Spule und *f* die Frequenz des Wechselfeldes (d.h. des elektromagnetischen Erregerfeldes) dar.

Gemäß der nachfolgenden Formel (4) kann über die Impedanz Z der Spule auch der Strom *I* durch die Spule berechnet werden:

$$I = \frac{U_{ind}}{Z} \qquad (4)$$

Um das magnetische Vektorpotential des Spulenfeldes (d.h. des magnetischen Antwortfeldes) und daraus die in den Empfangsantennen induzierten Spannungen zu berechnen kann analog vorgegangen werden.

Bei der Berechnung der erzeugten Vektorfelder und der induzierten Spannungen können im Falle mathematisch geschlossen beschreibbarer Geometrien wie Ellipsen für Exciter, Spulen oder Antennen auch analytische Formeln verwendet werden. Diese können dann mittels Vektorfeldtransformationen wie Quaternionen oder Rotationsmatrizen in die richtige Orientierung gedreht werden.

Die so berechneten induzierten Spannungen in den Empfangsantennen werden den zugehörigen Positionen und/oder Orientierungen des Spulensystems in der Fingerabdrucktabelle zugeordnet. Diese Tabelle wird für die Lokalisierung verwendet. Das Positions- und/oder Orientierungs-Raster der simulierten Punkte kann sich nach dem Anwendungsfall richten.

Bei der Lokalisierung wird dann beispielsweise das momentan mit den Empfangsantennen gemessene Feld an verschiedenen festgelegten Orten im Raum (Empfangsantennenpositionen, d.h. der Mehrzahl an vorbestimmten Messpositionen) gemessen und mit Einträgen in der Fingerabdrucktabelle verglichen.

Gemäß einigen Ausführungsbeispielen kann das Bestimmen 106 der Position des beweglichen Objekts Folgendes daher beispielsweise ein Bestimmen einer Ähnlichkeit eines der Mehrzahl an Messwerten zu einem der Referenzmesswerte gemäß einer vorbestimmten Metrik. Die Ähnlichkeit gibt dabei an, inwiefern ein Messwert mit einem der Referenzmesswerte übereinstimmt. Als Metrik kann z.B. die euklidische Metrik verwendet werden. Alternativ können aber auch andere Metriken für den Vergleich verwendet werden. Kennt man z.B. die Verteilung der Fehler im Messsignal (z.B. eine Gaußverteilung) kann als (Distanz-) Metrik eine Gaußverteilung verwendet werden, welche bessere Ergebnisse liefern kann.

Entsprechend kann in einigen Ausführungsbeispielen das Bestimmen 106 der Position des beweglichen Objekts ferner ein Bestimmen derjenigen einem Referenzwert zugeordneten Position des beweglichen Objekts als Position des beweglichen Objekts, deren Referenzwert gemäß der Metrik eine größte Ähnlichkeit zu der Mehrzahl an Messwerten aufweist, umfassen. Mit anderen Worten: Die dem ähnlichsten Referenzmesswert zugeordnete Position des beweglichen Objekts kann als Position des beweglichen Objekts bestimmt werden.

Wird z.B. die euklidische Distanz als Metrik verwendet, kann die Position des beweglichen Objekts gemäß der nachfolgenden Formel (5) bestimmt werden:

$$argmin \sum_{i=1}^{a} \left( U_{sim,i} - U_{mess,i} \right)^2 \qquad (5),$$

wobei a die Anzahl der verwendeten Messantennen, $U_{mess,i}$ die gemessene Spannung in der Antenne $i$ und $U_{sim,i}$ die simulierte Spannung für die Antenne $i$ in der Tabelle angibt. Gemäß Formel (5) wird der Eintrag in der Tabelle mit der niedrigsten euklidischen Distanz als geschätzte Position und/oder Orientierung bestimmt (gewählt).

Alternativ kann das Bestimmen 106 der Position des beweglichen Objekts in einigen Ausführungsbeispielen auch ein Bestimmen einer Anzahl der Referenzwerte, die gemäß der Metrik eine größte Ähnlichkeit zu der Mehrzahl an Messwerten aufweisen, umfassen. Ferner kann das Bestimmen 106 der Position des beweglichen Objekts dann ein Bestimmen eines gewichteten Mittelwerts der der Anzahl der Referenzwerte zugeordneten Positionen des beweglichen Objekts als Position des beweglichen Objekts umfassen. Mit anderen Worten: Es kann auch ein gewichteter Mittelwert aus einer Anzahl an Einträgen in der Tabelle mit der geringsten Distanz zu den Messwerten bestimmt werden.

Dazu kann beispielsweise ein gewichtetes k-nächste (engl. weigthed k-nearest) Lokalisierungsverfahren verwendet werden.

Bei der Lokalisierung wird nun nicht der Eintrag mit der niedrigsten euklidischen Distanz als Schätzwert ausgegeben, sondern es wird ein gewichteter Mittelwert aus den k Einträgen mit der geringsten Distanz gebildet. Die Distanz d kann beispielsweise gemäß der nachfolgenden Formel (6) bestimmt werden:

$$d = \sum_{i=1}^{a} \left( U_{sim,i} - U_{mess,i} \right)^2 \qquad (6)$$

Den k ähnlichsten Einträgen in der Datenbank, also z.B. den Einträgen mit der geringsten Distanz zwischen den gemessenen Antennenspannungen und den in der Tabelle hinterlegten Antennenspannungen, können Gewichtungen $w_n$ z.B. gemäß der nachfolgenden Formel (7) zugeordnet werden:

$$w_n = \frac{d_k - d_n}{d_k - d_1}, n = 1 \dots k \qquad (7)$$

$w_n$ stellt das Gewicht des n-nächsten Tabelleneintrages dar (d.h. des Referenzmesswerts mit der n-größten Ähnlichkeit), $w_1$ stellt das Gewicht für den Tabelleneintrag mit der geringsten euklidischen Distanz dar und $w_k$ stellt das Gewicht für den Eintrag innerhalb der k Einträge mit der größten Distanz dar.

In einigen Ausführungsbeispielen kann eine Gewichtung einer Position des beweglichen Objekts, welche einem der Anzahl der Referenzwerte zugeordnet ist, somit auf der Ähnlichkeit des einen der Anzahl der Referenzwerte zu der Mehrzahl an Messwerten basieren.

Die gemittelte geschätzte Position $\bar{x}$ kann nun beispielsweise gemäß der nachfolgenden Formel (8) bestimmt werden:

$$\bar{x} = \frac{\sum_{n=1}^{k} x_n w_n}{\sum_{n=1}^{k} w_n} \qquad (8)$$

Dabei gibt $x_n$ die geschätzte Raum-Position des zu lokalisierenden Objektes für den n-ten Eintrag innerhalb der k ähnlichsten Einträge an.

Mit diesem Verfahren können Positionen geschätzt werden, welche sich nicht auf dem Raster der Tabelle befinden. Somit kann eine Interpolationswirkung erzielt werden, welche die Genauigkeit der Positions-Schätzung über das Raster der Tabelle hinaus erhöht. Daher kann das Positions-Raster bei der Simulation der Tabelle gröber gewählt werden, als z.B. in den oben dargestellten Ausführungsbeispielen. Daher kann eine genaue Lokalisierung erreicht werden, ohne ein sehr feines Raster an Positionen mit sehr vielen Tabelleneinträgen zu simulieren. Dies kann eine Simulationsdauer verkürzen, eine Speicherbelegung der Tabelle vermindern sowie eine Suche in der Tabelle bei der eigentlichen Lokalisierung verkürzen. Eine Echtzeitlokalisierung kann daher ermöglicht werden. Ein weighted k-nearest Lokalisierungsverfahrens kann daher gleichzeitig eine Erhöhung der Lokalisierungsgenauigkeit und eine Verkleinerung der Tabelle ermöglichen.

Mitunter kann die Rechenzeit bei der Lokalisierung drastisch verringert sein, da eine kleinere Tabelle durchsucht werden muss. Die Vergröberung des Rasters hat eine kubische Verringerung der Tabellengröße zur Folge. Somit kann die zeitliche Dauer der Suche innerhalb der Tabelle beim Lokalisierungsvorgang kubisch verringert werden, was eine Echtzeitlokalisierung ermöglichen und gleichzeitig den Vorteil der erhöhten Lokalisierungsgenauigkeit nach sich ziehen kann. Die Gewichtung kann dabei klassischerweise linear erfolgen - dies ist aber abhängig von der Distanzmetrik. Verwendet man eine nichtlineare Distanzmetrik oder sind die Messwerte nichtlinear, bietet sich hier auch eine nichtlineare Gewichtung an. Diese kann die Lokalisierung verbessern.

Auf Grund von Störungen oder Rauschprozessen können vereinzelt auch falsche Positionswerte geschätzt werden. Auf Grund solcher Fehlschätzungen könnte die Position des Objektes nicht stabil geschätzt werden und zwischen weit entfernten Positionen hin und herspringen. In einigen Ausführungsbeispielen umfasst das Bestimmen 106 der Position des beweglichen Objekts daher ferner ein Filtern eines Kandidaten für die Position des beweglichen Objekts unter Verwendung eines Kalman-Filters. Das Kalman-Filter basiert dabei auf einem Bewegungsmodel für das bewegliche Objekt. Das Bewegungsmodell beschreibt eine gewöhnliche (übliche) Bewegung des beweglichen Objekts. Das Kalman-Filter kann ein Entfernen der Störungen ermöglichen.

Das Filtern des Kandidaten für die Position des beweglichen Objekts kann dabei in einigen Ausführungsbeispielen z.B. ein Bestimmen, unter Verwendung des Bewegungsmodels, einer prädizierten Position des beweglichen Objekts basierend auf vorhergehend bestimmten Positionen des beweglichen Objekts umfassen. Fernern kann Filtern des Kandidaten für die Position des beweglichen Objekts dann ein Vergleichen der prädizierten Position des beweglichen Objekts mit dem Kandidaten für die Position des beweglichen Objekts umfassen.

Das Filtern des Kandidaten für die Position des beweglichen Objekts kann dann ferner beispielsweise ein Verwerfen des Kandidaten für die Position des beweglichen Objekts umfassen, wenn ein Unterschied zwischen der prädizierten Position des beweglichen Objekts und dem Kandidaten für die Position des beweglichen Objekts größer als ein Schwellwert ist.

Mit anderen Worten: Es kann ein (Standard-) Kalman-Filter verwendet werden, welchem ein Bewegungsmodell hinterlegt wird. In diesem Filter kann auf Grund der Positionsschätzungen aus der Vergangenheit z.B. eine Position und Geschwindigkeit berechnet werden. Basierend aus diesen Werten kann eine Prädiktion für die Position im nächsten Zeitschritt vorhergesagt und mit der anschließenden Positionsschätzung auf Grund der neuen Messwerte gefiltert werden. Diese Kalman-Filterung mit Bewegungsmodell kann zur Folge haben, dass nicht plausible Sprünge in der Positionsschätzung von einem Zeitschritt zum nächsten als Messfehler angesehen werden und somit nicht in die Positionsschätzung einfließen. Die Stabilität der Positionsschätzung kann durch dieses Verfahren erhöht werden.

Alternativ zur Verwerfung des Kandidaten für die Position des beweglichen Objekts kann diesem auch weniger Vertrauen entgegengebracht werden, wenn ein Unterschied zu der prädizierten Position des beweglichen Objekts groß ist (z.B. größer als ein Schwellwert). Es kann beispielsweise eine Gewichtung der prädizierten Position und eine Gewichtung der auf Messdaten beruhenden Position (d.h. des Kandidaten für die Position des beweglichen Objekts) durchgeführt werden, und diese gewichtete Position verwendet werden. Auch dieser Ansatz kann eine Stabilität der Positionsschätzung erhöhen.

In einigen Ausführungsbeispielen kann das magnetische Antwortfeld beispielsweise durch drei zueinander orthogonale Spulen erzeugt werden. Die drei Spulen können dabei z.B. eingerichtet sein, bei einer identischen Orientierung relativ zu dem elektromagnetischen Erregerfeld im Wesentlichen gleiche magnetische Antwortteilfelder zu erzeugen. Das heißt, die erste Spule erzeugt ein erstes magnetisches Antwortteilfeld, die zweite Spule erzeugt ein zweites magnetisches Antwortteilfeld, während die dritte Spule ein drittes magnetisches Antwortteilfeld erzeugt. Das erste, das zweite und das dritte magnetische Antwortteilfeld können dabei sowohl identisch sein, als auch im Wesentlichen identisch sein, d.h. in ihren Eigenschaften nur geringfügig voneinander abweichen.

Mit einem zu lokalisierenden Spulensystem aus drei sich elektrisch ähnlich verhaltenden und zueinander orthogonalen Spulen ändert sich die Richtung und Amplitude des Sekundärfeldes (d.h. des magnetischen Antwortfeldes) dieses Spulensystems nur marginal mit der Orientierung des Spulensystems. Jede dieser drei Einzelspulen kann für sich z.B. durch die Kombination ihrer Eigenschaften (Windungszahl, Form und Impedanz) bei gleicher Orientierung an der gleichen Position im Primärfeld (d.h. dem elektromagnetischen Erregerfeld) ein geometrisch ähnlich geformtes und ähnlich starkes Sekundärfeld (magnetisches Antwortteilfeld) in ähnlicher Phasenlage liefern. Diese ähnliche Reaktion auf das Primärfeld kann ein Ausbilden eines rotationsunabhängigen Sekundärfeldes (magnetischen Antwortfeldes) ermöglichen. Denn in Summe verhalten sich diese drei orthogonal verbauten Spulen wie eine einzelne Spule die senkrecht auf dem Primärfeld steht. Ein solches Spulensystems kann vorteilhaft sein, da lediglich die Position, nicht aber die Orientierung eines solchen Spulensystems in der Tabelle hinterlegt werden muss. Dies kann die Suche der richtigen Position drastisch erleichtern, da die Tabelle um den Faktor $N_{alpha} * N_{beta} * N_{gamma}$ weniger Einträge benötigen kann. Dies kann den Speicherbedarf der Tabelle verringern sowie eine Echtzeitsuche der Position in der Tabelle ermöglichen.

Ferner kann es interessant sein, eine Orientierung des beweglichen Objekts im Raum zu bestimmen. In einigen Ausführungsbeispielen kann das magnetische Antwortfeld dazu durch drei zueinander orthogonale Spulen erzeugt werden. Die drei Spulen sind dabei eingerichtet, bei einer identischen Orientierung relativ zu dem elektromagnetischen Erregerfeld voneinander unterscheidbare magnetische Antwortteilfelder zu erzeugen. Das heißt, die erste Spule erzeugt ein erstes magnetisches Antwortteilfeld, die zweite Spule erzeugt ein zweites magnetisches Antwortteilfeld, während die dritte Spule ein drittes magnetisches Antwortteilfeld erzeugt. Das erste, das zweite und das dritte magnetische Antwortteilfeld weichen dabei in ihren Eigenschaften wesentlich voneinander ab. Beispielsweise können die drei Spulen unterschiedliche Resonanzfrequenzen aufweisen. Alternativ oder ergänzend können die jeweiligen magnetischen Antwortteilfelder der drei Spulen auch mit verschiedenen Codesequenzen moduliert sein.

Um die Orientierung eines Spulensystems zu bestimmen, kann das Spulensystem beispielsweise über drei orthogonal zueinander aufgebaute Spulen verfügen, deren Sekundärfelder voneinander unterscheidbar sind. Dies kann man z.B. durch die Abstimmung jeder der drei Spulen auf eine andere Resonanzfrequenz erzielt werden. Es bestehen jedoch auch andere Möglichkeiten, wie die Modulation einer eigenen Codesequenz auf jede der drei Spulen. Daneben könnte man die drei Spulen auch sequenziell nacheinander auf das Primärfeld (d.h. das elektromagnetische Erregerfeld) reagieren lassen. So hätte man eine zeitliche Trennung der Signale bewirkt. Die Spulen müssen nicht die gleiche Form oder die gleiche Windungszahl besitzen. Durch einen Skalierungsfaktor für jede Frequenz bzw. jede Spule können die Signale der drei Spulen so verrechnet werden, dass jede Spule an der gleichen Position bei gleicher Orientierung das gleiche (skalierte) Signal liefert. Diese Signale können nun dafür hergenommen werden, um mit dem oben beschriebenen Verfahren die 3D Position des Spulensystems zu bestimmen. Da nun die Position bekannt ist, kann die Orientierung jeder Spule einzeln bei dieser Position geschätzt werden. Dies kann ebenfalls mit einer Fingerabdrucktabelle geschehen. Die Verwendung der oben beschriebenen Positionsschätzung kann es zudem ermöglichen, bei der simultanen Positions- und Orientierungsschätzung auftretende Mehrdeutigkeiten zu eliminieren. Durch die Schätzung mehrerer Spulen kann dann eine Plausibilitätsentscheidung getroffen werden, welche der möglichen Positions-/Orientierungskombinationen in Frage kommen. Alternativ kann hier mit einem Kalman-Filter mit Bewegungs/Rotationsmodell einer Mehrdeutigkeit entgegengewirkt werden.

Wenn sich Parameter wie der Exciterstrom (d.h. der zum Erzeugen des elektromagnetischen Erregerfelds verwendete Strom) oder die Impedanz eines Antwortsystems, wie etwa einer Spule bzw. eines Spulensystems, dynamisch ändern, können die gemessenen Antennensignale (d.h. die Mehrzahl an Messwerten) von den theoretischen Werten in der Tabelle (d.h. den Referenzmesswerten) abweichen. In diesem Fall würde sich die Störung aber auf alle Antennensignale gleichermaßen auswirken. Deshalb kann das Bestimmen 104 der Mehrzahl an Messwerten für das magnetische Antwortfeld ein Normieren des für einen der Mehrzahl an vorbestimmten Messpositionen bestimmten Messwerts basierend auf der Summe der für alle der Mehrzahl an vorbestimmten Messpositionen bestimmten Messwerte umfassen.

Es kann also vorteilhaft sein, einen genormten Wert der gemessenen und simulierten Antennensignale zu vergleichen. Hierzu kann z.B. jede der gemessenen Antennenspannungen $U_{mess,i}$ mit der Summe der gemessenen Spannungen aller Messantennen gemäß der nachfolgenden Formel (9) normiert werden:

$$U_{mess,i,norm} = \frac{U_{mess,i}}{\sum_{i=1}^{a} U_{mess,i}} \qquad (9)$$

So kann für jede der a Antennen ein genormter Messwert bestimmt werden.

Die in der Tabelle hinterlegten Spannungen können ebenfalls gemäß Formel (9) verrechnet werden. Das heißt, das Verfahren 100 kann ferner ein Normieren eines der Referenzwerte basierend auf der Summe der für alle der Mehrzahl an vorbestimmten Messpositionen bestimmten Messwerte umfassen.

Vorteilhaft an einer solchen Normierung kann es sein, dass das Antennensignal jeder einzelnen Empfangsantenne ein prozentualer Wert an der insgesamt von allen Empfangsantennen gemessenen Spannung ist. Wenn sich plötzlich durch eine Störung entweder der Strom im Exciter oder im Spulensystem ändert, ändern sich die Absolutwerte der Empfangsspannungen, nicht jedoch die Prozentualen (normierten) Werte. Die absolut gemessenen Werte würden mit den absoluten Einträgen in der Tabelle nicht mehr übereinstimmen. Wenn die Tabelle jedoch gemäß Formel (9) normiert ist, kann eine Zuordnung der gemessenen normierten Antennenspannungen zu den simulierten normierten Spannungen möglich sein.

Durch die Normierung geht jedoch die Tiefeninformation verloren. Das bedeutet, dass die Entfernung des Spulensystems (oder eines anderen beweglichen Objekts) von der Exciter-Ebene, in der z.B. ebenfalls die Empfangsantennen angeordnet sein können, nicht mehr bestimmt werden kann. Entsprechend wäre nur in der Exciter-Ebene eine genaue Positionsschätzung möglich. Diesem Mangel kann mit einer Verlegung der Empfangsantennen außerhalb der Exciter-Ebene entgegengetreten werden. Die Mehrzahl an vorbestimmten Messpositionen kann sich daher in einigen Ausführungsbeispielen außerhalb einer Ebene, in der das Erzeugen des elektromagnetischen Erregerfeldes stattfindet, befinden.

Wenn sich weiterhin (z.B. große) Objekte in der Lokalisierungsumgebung befinden, können diese das Primärfeld (d.h. das elektromagnetische Erregerfeld) verzerren, so dass die simulierte Tabelle (d.h. die Referenzmesswerte) nicht mehr die reale Umgebung wiederspiegeln. Dadurch kann die Lokalisierungsgenauigkeit in der Umgebung dieses Störobjektes herabgesetzt sein.

Daher kann das Verfahren 100 ferner ein Bestimmen, dass sich das bewegliche Objekt nicht in einem vorbestimmten Umkreis um einen Erzeugungsort des elektromagnetischen Erregerfeldes befindet, umfassen. Das Bestimmen basiert dabei auf einem Frequenzdurchlauf (engl. frequency sweep) des elektromagnetischen Erregerfeldes. Ferner kann das Verfahren 100 dann ein Bestimmen einer Mehrzahl an Hilfsmesswerten an der Mehrzahl an vorbestimmten Messpositionen umfassen. Die Mehrzahl an Hilfsmesswerten repräsentiert dabei ein magnetisches Antwortfeld eines Störobjekts an der Mehrzahl an vorbestimmten Messpositionen. Auch kann das Verfahren 100 weiter ein Schätzen einer Position des Störobjekts basierend auf einem Vergleich der Mehrzahl an Hilfsmesswerten mit den Referenzmesswerten (z.B. gemäß den obigen Grundsätzen) umfassen. Das Verfahren 100 kann dann unter Berücksichtigung des Störobjekts ferner noch ein Bestimmen eines aktualisierten Referenzmesswerts für eine Position, die einen vorbestimmten maximalen Abstand zu der Position des Störobjekts aufweist, umfassen. Auf diese Weise können aktualisierte Referenzmesswerte in der Umgebung des Störobjekts bestimmt werden, welche die durch das Störobjekt verursachten Störeffekte berücksichtigen. Entsprechend kann die Position eines beweglichen Objekts auch bei Vorhandensein eines Störobjekts akkurat bestimmt werden.

Beispielsweise kann zunächst ein Frequenzsweep mit der Primärfeldfrequenz (d.h. der Frequenz des elektromagnetischen Erregerfeldes) gemacht werden, um zu überprüfen, ob sich eine Spule in der Nähe befindet. Sollte sich keine Spule in der Nähe befinden, kann aufgrund der aktuell gemessenen Antenennspannungen die Position eines Störobjektes grob geschätzt werden. Anschließend kann die Tabelle dynamisch neu in der Umgebung des Störobjektes simuliert werden. Beispielsweise wird nun das Störobjekt als eine Spule mit der bekannten, da gemessenen Phasenlage simuliert. Die Amplitude dieses Störsekundärfeldes kann ebenfalls geschätzt werden. In der Simulation wird nun in das zu lokalisierende Spulensystem (d.h. das beweglich Objekt) eine Spannung aufgrund des Primärfeldes des Exciters (d. h. des Erregersystems) als auch aufgrund des Sekundärfeldes des Störobjektes induziert. Mit dieser die Realität besser abbildende Tabelle kann nun eine optimierte Lokalisierung in der Nähe des Störers durchgeführt werden. Ein Einfluss eines großen, feldverzerrenden Störobjekts kann somit reduziert werden.

Weiterhin kann es von Interesse sein, mehrere bewegliche Objekte simultan (d.h. parallel) zu identifizieren und lokalisieren. Dazu kann das Verfahren 100 beispielsweise ferner ein Bestimmen einer Mehrzahl an zweiten Messwerten an der Mehrzahl an vorbestimmten Messpositionen umfassen. Die Mehrzahl an zweiten Messwerten repräsentiert dabei ein zweites magnetisches Antwortfeld eines zweiten beweglichen Objekts an der Mehrzahl an vorbestimmten Messpositionen. Eine erste Resonanzfrequenz eines ersten Antwortsystems des beweglichen Objekts, welches zum Aussenden des magnetischen Antwortfeldes verwendet wird, ist dabei von einer zweiten Resonanzfrequenz eines zweiten Antwortsystems des zweiten beweglichen Objekts, welches zum Aussenden des zweiten magnetischen Antwortfeldes verwendet wird, verschieden. Weiterhin kann das Verfahren 100 ein Bestimmen der Position des zweiten beweglichen Objekts basierend auf einem Vergleich der Mehrzahl an zweiten Messwerten mit den Referenzmesswerten umfassen. Durch das Abstimmen der beiden beweglichen Objekte auf unterschiedliche Resonanzfrequenzen können die zweiten Messwerte für das zweite bewegliche Objekt von den Messwerten für das (erste) bewegliche Objekt unterschieden und gemäß den obigen Grundsätzen die Position des zweiten beweglichen Objekts bestimmt werden.

Wenn man zwei oder mehr Spulensysteme gleichzeitig in das Primärfeld positioniert und dabei die Spulensysteme auf der gleichen Frequenz abgestimmt sind, können die einzelnen Sekundärfelder der Spulensysteme in den Empfangsantennen nicht voneinander unterschieden werden. Die Folge ist, dass weder die eine Spule noch die andere lokalisiert werden könnten.

Wie oben ausgeführt, kann durch Abstimmung der jeweiligen Spulensysteme auf verschiedene Resonanzfrequenzen Abhilfe geschaffen werden. Im Empfänger können auf diese Weise die Signale voneinander getrennt und zur Lokalisierung weiterverarbeitet werden. Somit kann die simultane Identifikation und Lokalisierung mehrerer Spulensysteme durch Abstimmen der Spulen auf verschiedene Frequenzen ermöglicht werden.

Alternativ kann das Verfahren 100 für die simultane (d.h. parallele) Identifikation und Lokalisierung mehrerer beweglicher Objekte ferner wiederum ein Bestimmen einer Mehrzahl an zweiten Messwerten an der Mehrzahl an vorbestimmten Messpositionen umfassen. Die Mehrzahl an zweiten Messwerten repräsentiert dabei wiederum ein zweites magnetisches Antwortfeld eines zweiten beweglichen Objekts an der Mehrzahl an vorbestimmten Messpositionen. Das magnetische Antwortfeld und das zweite magnetische Antwortfeld sind dabei mit zueinander orthogonalen Codes moduliert. Das Verfahren 100 kann ferner noch ein Bestimmen der Position des zweiten beweglichen Objekts basierend auf einem Vergleich der Mehrzahl an zweiten Messwerten mit den Referenzmesswerten umfassen. Durch die Verwendung orthogonaler Codes für die Modulation können die zweiten Messwerte für das zweite bewegliche Objekt von den Messwerten für das (erste) bewegliche Objekt unterschieden und gemäß den obigen Grundsätzen die Position des zweiten beweglichen Objekts bestimmt werden.

Eine weitere Möglichkeit zur simultanen Identifikation und Lokalisierung von Spulensystemen kann somit durch eine Modulation des Sekundärfelds der Spulen (d.h. der magnetischen Antwortfelder) mit jeweils zueinander orthogonalen Codes bereitgestellt werden. Geeignete Codesequenzen können alle Codesequenzen, die zueinander orthogonal sind - also gute Kreuzkorrelationseigenschaften besitzen - sein, wie z.B. M-Sequenzen oder Gold-Codes. Im Empfänger kann das Empfangssignal jeder Antenne mit den bekannten Bit-Mustern korreliert werden. Die jeweilige Höhe des Korrelationspeaks in jeder Antenne kann dann direkt proportional zur Feldstärke in den Antennen sein und kann somit als Indikator für die Feldstärke hergenommen werden. Diese Korrelationspeaks können nun beispielsweise nach einer geeigneten Skalierung als Ersatz für die in den Empfangsantennen induzierten Spannungen hergenommen werden. Somit kann mit ihnen innerhalb der Fingerabdrucktabellen gesucht werden.

Dies kann vorteilhaft sein, da alle Spulen bei der gleichen Frequenz abgestimmt sein können und für eine gewisse Bitlänge eine Vielzahl an zueinander orthogonalen Codes mit guten Kreuzkorrelationseigenschaften bestehen. Deshalb kann simultan eine Vielzahl verschiedener Spulen identifiziert und lokalisiert werden. Ein weiterer positiver Effekt kann der Codegewinn sein, welcher die Signale aus dem Rauschen herausheben kann. Hierbei können Signale mit geringer Signalamplitude mit länger werdender Codelänge besser detektiert werden. Somit kann die simultane Identifikation und Lokalisierung mehrerer Spulensysteme durch Modulation ermöglicht werden.

Die hier vorgestellten Verfahren können also eine relativ störresistente Lokalisierung und/oder Orientierungsschätzung eines z.B. passiven Spulensystems in Echtzeit bei sich ändernden aber bekannten Konfigurationen der Systemeigenschaften ermöglichen.

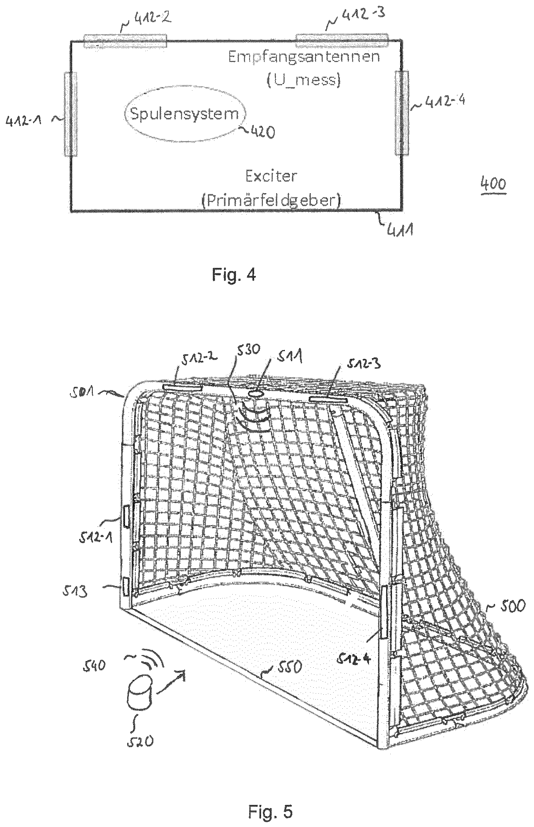

Weitere Details und Aspekte des Verfahrens 100 sind nachfolgend in Zusammenhang mit einem oder mehreren Ausführungsbeispielen (z.B. Fig. 4 und Fig. 5) beschrieben. Das Verfahren kann eines oder mehrere optionale Merkmale gemäß einem oder mehreren der nachfolgend beschriebenen Ausführungsbeispiele umfassen.

**Fig. 3** zeigt im Folgenden ein System 300 mit einem beweglichen Objekt 320 und einer Vorrichtung 310 zum Bestimmen einer Position des beweglichen Objekts. Das bewegliche Objekt 320 ist dabei eingerichtet, als Reaktion auf ein elektromagnetisches Erregerfeld 330 ein magnetisches Antwortfeld 340 auszuprägen bzw. zu erzeugen.

Die Vorrichtung 310 umfasst ein Erregermodul 311, das eingerichtet ist, das elektromagnetische Erregerfeld 330 zu erzeugen. Das elektromagnetische Erregerfeld 330 ist dabei eingerichtet, das bewegliche Objekt 320 zum Ausprägen (Erzeugen) des magnetischen Antwortfeldes 340 anzuregen.

Ferner umfasst die Vorrichtung 310 ein Messmodul 312, das eingerichtet ist, eine Mehrzahl an Messwerten für das magnetische Antwortfeld 340 durch Messen des magnetischen Antwortfeldes 340 an einer Mehrzahl an vorbestimmten Messpositionen zu bestimmen.

Auch umfasst die Vorrichtung 310 ein Auswertemodul 313, das eingerichtet ist, die Position des beweglichen Objekts basierend auf einem Vergleich der Mehrzahl an Messwerten mit Referenzmesswerten zu bestimmen. Den Referenzmesswerten ist dabei jeweils eine Position des beweglichen Objekts 320 zugeordnet ist. Die Referenzmesswerte sind jeweils durch eine Simulation bestimmt.

Die Vorrichtung 310 kann eine Lokalisierung des beweglichen Objekts 320 in Echtzeit ermöglichen. Aufgrund der Bestimmung der Referenzmessewerte durch eine Simulation können sowohl ein Zeitaufwand als auch eine Komplexität für das Erzeugen der Referenzmesswerte reduziert sein. Insbesondere kann auf Änderungen der Umgebung bzw. des beweglichen Objekts durch eine Aktualisierung der Referenzmesswerte mittels einer angepassten Simulation schnell und mit lediglich geringem Aufwand reagiert werden. Komplexe Messungen zur Bestimmung der Referenzmesswerte können vermieden werden.

Wie vorangehend bereits angedeutet, kann es sich bei dem beweglichen Objekt um jegliches Objekt handeln, dass sich im Raum bewegen und als Reaktion auf ein elektromagnetisches Erregerfeld ein magnetisches Antwortfeld ausprägen bzw. erzeugen kann. Beispielsweise kann das bewegliche Objekt eine Spule bzw. ein Spulensystem sein oder ein solches umfassen.

Das Erregermodul 311 kann dabei eingerichtet sein, das elektromagnetische Erregerfeld 330 gemäß den vorbeschriebenen Grundsätzen zu erzeugen und in seiner Umgebung auszuprägen. Insbesondere kann das Erregermodul 311 dazu eine oder mehrere Spulen, eine oder mehrere Leiterschleifen bzw. eines oder mehrere Spulensystem umfassen, welche von einem elektrischen Strom durchflossen sind.

Das Messmodul 312 kann dabei eingerichtet sein, das magnetische Antwortfeld 340 gemäß den vorbeschriebenen Grundsätzen zu empfangen und die Messwerte für das magnetische Antwortfeld 340 zu bestimmen. Insbesondere kann das Messmodul 312 eine Mehrzahl an Empfangsantennen umfassen, welche an der Mehrzahl an vorbestimmten Messpositionen angeordnet sind. Dabei können an einer oder mehreren der Mehrzahl an vorbestimmten Messpositionen sowohl eine einzelne Messantenne als auch mehrere Messantennen angeordnet sein. Das Messmodul 312 kann ferner eine oder mehrere geeignete Ausleseelektronik(en) umfassen, um die von den Empfangsantennen gemessen Signale für die Weiterverarbeitung durch das Auswertemodul 313 aufzubereiten. Beispielswese kann eine Ausleseelektronik die gemessenen Signale filtern und/oder digitalisieren.

Das Auswertemodul 313 kann dabei eingerichtet sein, die Position des beweglichen Objekts 320 gemäß den vorbeschriebenen Grundsätzen aus der Mehrzahl an Messwerten und den Referenzmesswerten zu bestimmen. Dazu kann das Auswertemodul beispielsweise einen Prozessor, einen Computerprozessor (engl. CPU = Central Processing Unit), einen Grafikprozessor (engl. GPU = Graphics Processing Unit), einen Computer, ein Computersystem, einen anwendungsspezifischen integrierten Schaltkreis (engl. ASIC = Application-Specific Integrated Circuit), einen integrierten Schaltkreis (engl. IC = Integrated Circuit), ein Ein-Chip-System (engl. SoC = System on a Chip), ein programmierbares Logikelement oder ein feldprogrammierbares Gatterarray mit einem Mikroprozessor (FPGA = Field Programmable Gate Array) aufweisen, auf dem Software für die Steuerung des Auswertemodul 313 gemäß dem obigen Grundsätzen abläuft. Ferner kann das Auswertemodul 313 einen oder mehrere Speicher aufweisen, in denen z.B. für die Steuerung des Auswertemodul 313, die Referenzmesswerte oder sonstige Daten gespeichert sein können.

Weitere Details und Aspekte der Vorrichtung 310 als auch des beweglichen Objekts 320 sind in Zusammenhang mit einem oder mehreren weiteren Ausführungsbeispielen (z.B. Figs. 1, 4 5) beschrieben. Die Vorrichtung 310 als auch das bewegliche Objekts 320 können eines oder mehrere optionale Merkmale gemäß einem oder mehreren der weiteren Ausführungsbeispiele umfassen.

Nachfolgend werden in den Figs. 4 und 5 zwei beispielhafte Anwendungsszenarien für die vorgeschlagene Positionsbestimmung beweglicher Objekte näher beschrieben. Es versteht sich von selbst, dass die vorgeschlagene Positionsbestimmung beweglicher Objekte nicht auf die konkret beschriebenen Anwendungsszenarien beschränkt ist, sondern dass die Position jeglicher beweglicher Objekte, welche als Reaktion auf ein elektromagnetisches Erregerfeld ein magnetisches Antwortfeld ausprägen bzw. erzeugen können, bestimmt werden kann.

Fig. 4 zeigt ein System 400 zum Bestimmen eines Eingriffsortes in ein Regal. In der Logistik kann es beispielsweise erforderlich sein, den Eingriffsort eines Kommissionierers in ein Regal zu kennen bzw. zu bestimmen. Derart kann eine Kontrolle erfolgen, ob der Kommissionierer Ware aus dem richtigen Regalfach genommen bzw. in welches Regalfach er Ware abgelegt hat. Das System 400 kann dies ermöglichen.

Der Kommissionierer kann dazu beispielsweise ein passives Spulensystem 420 am Handgelenk tragen. Das Spulensystem 420 kann beispielsweise in einem Accessoire, wie etwa einem Armband oder einer Armbanduhr, angeordnet sein. Das Spulensystem 420 ist dabei eingerichtet als Reaktion auf ein elektromagnetisches Erregerfeld ein magnetisches Antwortfeld auszuprägen bzw. zu erzeugen. Das Spulensystem 420 ist somit ein Beispiel für ein zuvor allgemein beschriebenes bewegliches Objekt.

Das zu lokalisierende Spulensystem 420 kann beispielsweise aus drei gleich geformten, orthogonal zueinander verbauten Einzelspulen, aus einer einzelnen beliebig geformten Spule oder auch aus drei beliebig geformten, zueinander orthogonalen Spulen bestehen. Die Spulen können resonant auf eine einzige Frequenz abgestimmt sein. Alternativ kann auch jede Spule auf eine andere Frequenz abgestimmt sein.

Das System 400 umfasst ferner eine Vorrichtung zum Bestimmen eines Eingriffsortes in das Regal gemäß den oben dargelegten Grundsätzen. Wie in Fig. 4 dargestellt, umfasst die Vorrichtung ein Erregermodul um das elektromagnetisches Erregerfeld zu erzeugen. Das elektromagnetische Erregerfeld ist dabei eingerichtet, das Spulensystem 420 zum Ausprägen (Erzeugen) des magnetischen Antwortfeldes anzuregen. Um das hierfür benötigte primäre magnetische Wechselfeld (d.h. das elektromagnetisches Erregerfeld) zu generieren, ist das Erregermodul als eine um das Regal herum angebrachte Erregerspule 411 (engl. exciter) ausgebildet.

Durch das primäre magnetische Wechselfeld (d.h. das elektromagnetisches Erregerfeld) wird ein Strom in der Spule des Spulensystems 420 induziert. Die Spule erzeugt dadurch ein Sekundärmagnetfeld (d.h. ein magnetisches Antwortfeld).

Das Sekundärmagnetfeld welches der Strom im Spulensystem ausprägt, wird von einem Messmodul an einer Mehrzahl an vorbestimmten Messpositionen gemessen, um eine Mehrzahl an Messwerten für das Sekundärmagnetfeld zu bestimmen. Dazu kann das Messmodul mehrere Rahmenantennen (Empfangsantennen) 412-1, 412-2, 412-3, 412-4 aufweisen, die um das Regal herum angeordnet sind. Das Sekundärmagnetfeld, welches der Strom im Spulensystem ausprägt, wird somit von den Rahmenantennen (Empfangsantennen) 412-1, 412-2, 412-3, 412-4 gemessen, die um das Regal herum angeordnet sind.

Bei industriell gefertigten Standard-Rohr-Regalen, können die Empfangsantennen 412-1, 412-2, 412-3, 412-4 in die Rohrstruktur eingebracht werden. Die Rohre können hierzu aus geeigneten Materialien bestehen, welche eine zumindest teilweise Durchdringung durch ein magnetisches Feld ermöglichen. So kann der Anwender das Regal beliebig zusammenbauen und im Nachgang in z.B. einer Tabellenerstellungssoftware angeben, wo sich die Antennen befinden und wie groß das Regal ist. Die Rohrsysteme können hierfür z.B. modular aufgebaut sein und über Anschlüsse für die Antennen verfügen.

Es versteht sich von selbst, dass die Anzahl der Empfangsantennen nicht auf die in Fig. 4 gezeigten vier Antennen beschränkt ist. Vielmehr kann jede beliebige Anzahl an Antennen verwendet werden. Basierend auf einer gewünschten Dimension oder einer gewünschten Genauigkeit der zu bestimmenden Position des Eingriffsortes kann die Anzahl der Empfangsantennen gewählt werden. Ebenso kann die Anzahl der Empfangsantennen mit der Größe des Regals skaliert werden.

Aus den Messwerten der Empfangsantennen kann nun ein Auswertemodul (nicht gezeigt) die Position des Eingriffs in das Regal (d.h. die Position des Spulensystems) gemäß den oben ausgeführten Grundsätzen basierend auf einem Vergleich der Mehrzahl an Messwerten mit Referenzmesswerten, denen jeweils eine Position des Spulensystems 420 zugeordnet ist, bestimmen.

Aufgrund der Bestimmung der Referenzmessewerte durch eine Simulation können sowohl ein Zeitaufwand als auch eine Komplexität für das Erzeugen der Referenzmesswerte reduziert sein. Insbesondere kann auf Änderungen der Umgebung bzw. des Spulensystems 420 durch eine Aktualisierung der Referenzmesswerte mittels einer angepassten Simulation schnell und mit lediglich geringem Aufwand reagiert werden. Komplexe Messungen zur Bestimmung der Referenzmesswerte können vermieden werden.

Das System 400 stellt somit eine induktive Lösung zur Lokalisierung des Eingriffsortes eines Kommissionierers in ein Regalfach dar.

Das System 400 erkennt in welches der Fächer der Kommissionierer hineingreift. Dies kann auch im Falle sich ändernder Regalfachkonfiguration und einer sich ändernden Regalstruktur gegeben sein. So können z.B. die Antennen 412-1, 412-2, 412-3, 412-4 zur Messung des Sekundärmagnetfeldes und die Schleife 411 für die Primärfelderzeugung bei Bedarf vom Anwender geometrisch versetzt und an anderen Orten angebracht werden. Die akkurate Lokalisierung kann dabei durch ein Aktualisieren der Referenzmesswerte mittels einer angepassten Simulation gewährleistet werden. Die Verwendung passiver Spulen kann zudem das Einsparen einer mobilen Stromversorgung für das zu lokalisierenden Objekt ermöglichen.

Fig. 5 zeigt eine Vorrichtung zum Bestimmen einer Position eines Eishockey-Pucks 520. Die Vorrichtung kann z.B. verwendet werden, um zu bestimmen, ob der Puck 520 sich in einem Tor 500 befindet, d.h. eine Torlinie 550 überquert hat.

Die Vorrichtung umfasst ein Erregermodul 511, das eingerichtet ist, ein elektromagnetisches Erregerfeld 530 zu erzeugen. Das elektromagnetische Erregerfeld 530 ist dabei eingerichtet, den Puck 320 zum Ausprägen (Erzeugen) des magnetischen Antwortfeldes 540 anzuregen. Dazu kann das Erregermodul 511 beispielsweise ein elektromagnetisches Erregerfeld gemäß den vorangehend beschriebenen Grundsätzen erzeugen. Beispielsweise kann das Erregermodul 511 ein magnetisches Wechselfeld erzeugen. Wie in Fig. 5 angedeutet, kann das Erregermodul 511 beispielsweise in oder an einem Torpfosten bzw. einer Querlatte 501 des Tores 500 angeordnet sein. Beispielsweise kann das Erregermodul 511 eine oder mehrere Leiterschleifen, eine oder mehrere Spulen oder eines oder mehrere Spulensysteme, die in oder an dem Torpfosten bzw. der Querlatte 501 des Tores 500 angeordnet sind, umfassen.

Der Puck 520, welcher im Wesentlichen aus Hartgummi bestehen und eine Scheibenform aufweisen kann, ist dabei eingerichtet, als Reaktion auf das elektromagnetische Erregerfeld 530 das magnetische Antwortfeld 540 auszuprägen bzw. zu erzeugen. Dazu kann der Puck 520 beispielsweise eine oder mehrere Spule (nicht gezeigt) oder auch eines oder mehrere Spulensysteme (nicht gezeigt) aufweisen. Beispielsweise können die Spule oder die Spulensysteme gemäß den vorangehend beschriebenen Grundsätzen ausgeführt bzw. eingerichtet sein.

Ferner umfasst die Vorrichtung ein Messmodul, das eingerichtet ist, eine Mehrzahl an Messwerten für das magnetische Antwortfeld 540 durch Messen des magnetischen Antwortfeldes 540 an einer Mehrzahl an vorbestimmten Messpositionen zu bestimmen. Bei dem in Fig. 5 gezeigten Beispiel weist das Messmodul eine Mehrzahl an Messsubmodulen 512-1, 512-2, 512-3 auf, welche an der Mehrzahl an vorbestimmten Messpositionen angeordnet sind. Bei den Messsubmodulen 512-1, 512-2, 512-3 kann es sich beispielsweise um Empfangsantennen handeln, welche das magnetische Antwortfeld 540 messen. Wie in Fig. 5 angedeutet, kann die Mehrzahl an Messpositionen entlang des Torpfostens bzw. der Querlatte 501 des Tores 500 angeordnet sein. So können z.B. mehrere Empfangsantennen in oder an dem Torpfosten bzw. er Querlatte 501 des Tores 500 angeordnet sein. Alternativ können die Messsubmodule 512-1, 512-2, 512-3 unterhalb des Tores 500 (z.B. in oder unterhalb der Eisfläche) befinden.

Es versteht sich von selbst, dass die Anzahl der Empfangsantennen nicht auf die in Fig. 5 gezeigten drei Antennen beschränkt ist. Vielmehr kann jede beliebige Anzahl an Antennen (d.h. an Messsubmodulen) verwendet werden. Basierend auf einer gewünschten Dimension oder einer gewünschten Genauigkeit der zu bestimmenden Position des Pucks 520 kann die Anzahl der Empfangsantennen (d.h. der Messsubmodule) gewählt werden.

Die Torpfosten bzw. die Querlatte 501 des Tores 500 können dabei zumindest teilweise aus geeigneten Materialien bestehen, welche eine zumindest teilweise Durchdringung durch ein magnetisches Feld ermöglichen.

Auch umfasst die Vorrichtung ein Auswertemodul 513, das eingerichtet ist, die Position des Pucks 520 basierend auf einem Vergleich der Mehrzahl an Messwerten mit Referenzmesswerten zu bestimmen. Den Referenzmesswerten ist dabei jeweils eine Position des beweglichen Objekts 520 zugeordnet ist. Die Referenzmesswerte sind jeweils durch eine Simulation bestimmt. Wie in Fig. 5 angedeutet, kann das Auswertemodul 513 beispielsweise in oder an dem Torpfosten bzw. der Querlatte 501 des Tores 500 angeordnet sein und das Ergebnis der Positionsbestimmung z.B. mittels einer Funktechnik an eine weitere Entität weiterleiten. Alternativ kann das Auswertemodul 513 auch außerhalb des Tores bzw. Eishockeyspielfelds angeordnet sein. Entsprechend kann die Mehrzahl an Messwerten beispielsweise über eine Funktechnik von dem Messmodul zu dem Auswertemodul übertragen und dort ausgewertet werden.

Die Vorrichtung kann eine Lokalisierung des Pucks 520 in Echtzeit ermöglichen. Aufgrund der Bestimmung der Referenzmessewerte durch eine Simulation können sowohl ein Zeitaufwand als auch eine Komplexität für das Erzeugen der Referenzmesswerte reduziert sein. Komplexe Messungen zur Bestimmung der Referenzmesswerte können vermieden werden.

Um zu bestimmen, ob der Puck 520 sich im Tor 500 befindet, d.h. die Torlinie 550 überquert hat, kann nun beispielsweise die eben bestimmte Position des Pucks 520 mit einer Position der Torlinie 550 verglichen werden.

Weitere Details und Aspekte des Pucks 520 als auch der Vorrichtung zum Bestimmen einer Position des Pucks sind in Zusammenhang mit einem oder mehreren weiteren Ausführungsbeispielen (z.B. Figs. 1 und 3) beschrieben. Der Puck 520 als auch die Vorrichtung zum Bestimmen einer Position des Pucks können eines oder mehrere optionale Merkmale gemäß einem oder mehreren der weiteren Ausführungsbeispiele umfassen.

Im Zusammenhang mit Fig. 5 wurde beispielhaft die Bestimmung einer Position eines Pucks in einem Eishockeyspiel beschrieben. Es versteht sich jedoch von selbst, dass die beschriebenen Verfahren nicht darauf beschränkt sind. Beispielsweise kann nach den oben dargelegten Grundsätzen auch die Position eines oder mehrerer Eishockeyspieler oder auch eines oder mehrerer Ausrüstungsgegenstände eines oder mehrerer Eishockeyspieler bestimmt werden. Dazu können der oder die Eishockeyspieler bzw. der oder die Ausrüstungsgegenstände mit einer Komponente (Element, Vorrichtung) ausgerüstet sein, welche als Reaktion auf ein elektromagnetisches Erregerfeld ein magnetisches Antwortfeld ausprägen bzw. erzeugen kann. Beispielsweise können eine oder mehrere Spulen oder eines oder mehrere Spulensysteme an einem Körper eines Eishockeyspielers oder an einem Ausrüstungsgegenstand eines Eishockeyspielers angebracht sein. Derart kann z.B. auch ein Torraumabseits eines Eishockeyspielers bestimmt werden.

Es versteht sich von selbst, dass das Bestimmen, ob der Puck 520 sich im Tor 500 befindet, nur ein Beispiel für das Bestimmen eines Durchgangs eines beweglichen Objekts durch eine interessierende Ebene ist. Ganz allgemein kann gemäß den oben genannten Grundsätzen die Position eines beweglichen Objekts bestimmt und mit der Position einer interessierenden Ebene verglichen werden.

Es versteht sich auch von selbst, dass die beschriebenen Verfahren nicht auf eine Anwendung beim Eishockey beschränkt sind. Beispielsweise kann nach den oben dargelegten Grundsätzen auch die Position eines beliebigen Sportlers, eines beliebigen Sportgeräts bzw. eines beliebigen Ausrüstungsgegenstands bestimmt werden. Rein beispielhaft sei hier auf die Bestimmung einer Position des Spielballs beim Fußball, beim Basketball, beim Handball, beim Baseball, beim American Football, beim Volleyball, beim Beachvolleyball, beim Beachsoccer, beim Wasserball, beim Tennis, beim Tischtennis, beim Streethockey, beim Hockey, beim Lacrosse, beim Badminton, beim Faustball, beim Softball, beim Cricket, beim Kugelstoßen oder einer sonstigen Ballsportart verwiesen. Natürlich können bei den vorgenannten Sportarten auch die Positionen eines oder mehrere Spieler bzw. eines oder mehrerer Ausrüstungsgegenstände gemäß den oben dargelegten Grundsätzen bestimmt werden. Dies kann einen Schiedsrichter bzw. einen Spielleiter bei der Leitung des Spiels unterstützen. Beispielsweise kann mit einer Positionsbestimmung gemäß den oben dargelegten Grundsätzen ein Schiedsrichter bei der Entscheidung, ob ein Tor gefallen ist oder nicht, oder bei der Entscheidung, ob sich ein Spieler unerlaubt in einem bestimmten Bereich eines Spielfelds befindet (z.B. Abseits beim Fußball oder Eishockey), unterstützt werden.

Die Positionsbestimmung gemäß den oben dargelegten Grundsätzen ist dabei jedoch keineswegs auf Ballsportarten beschränkt. Es kann die Position eines beliebigen Sportlers, eines beliebigen Sportgeräts bzw. eines beliebigen Ausrüstungsgegenstands bestimmt werden.

Wie bereits oben angedeutet, kann die Positionsbestimmung gemäß den oben dargelegten Grundsätzen z.B. auch bei der Erzeugung virtueller Realitäten genutzt werden, um eine Position, eine Orientierung bzw. eine Bewegung eines Nutzers in der realen Umgebung zu erfassen und diese bei der Darstellung der virtuellen Realität zu berücksichtigen. Beispielsweise kann gemäß den oben dargelegten Grundsätzen auch eine Position, eine Orientierung bzw. eine Bewegung eines von einem Nutzer gehaltenen bzw. getragenen Objekts erfasst und bei der Darstellung der virtuellen Realität berücksichtigt werden.

Die Positionsbestimmung gemäß den oben dargelegten Grundsätzen kann grundsätzlich für die Bestimmung einer Position eines Objekts in einem beliebigen Anwendungsszenario verwendet werden.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung oder Aspekte davon in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, eine CPU, eine GPU, einen Computer, ein Computersystem, einen ASIC, einen IC, ein SoC, ein programmierbares Logikelement oder ein FPGA gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung oder Aspekte davon als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren oder Aspekte davon durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren oder Aspekten davon darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren oder Aspekte davon während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Verfahren (100) zum Bestimmen einer Position eines beweglichen Objekts im Raum zur Lokalisierung dieses Objekts, umfassend:

Erzeugen (102) eines elektromagnetischen Erregerfeldes, wobei das elektromagnetische Erregerfeld eingerichtet ist, das bewegliche Objekt zum Ausprägen eines magnetischen Antwortfeldes anzuregen; und
Bestimmen (104) einer Mehrzahl an Messwerten für das magnetische Antwortfeld durch Messen des magnetischen Antwortfeldes an einer Mehrzahl an vorbestimmten Messpositionen;
**gekennzeichnet durch** das Bestimmen (106) der Position des beweglichen Objekts basierend auf einem Vergleich der Mehrzahl an Messwerten mit Referenzmesswerten, wobei den Referenzmesswerten jeweils eine Position des beweglichen Objekts zugeordnet ist, und wobei die Referenzmesswerte jeweils durch eine Simulation bestimmt sind.

2. Verfahren nach Anspruch 1, wobei das Bestimmen (106) der Position des beweglichen Objekts Folgendes umfasst:
Bestimmen einer Ähnlichkeit eines der Mehrzahl an Messwerten zu einem der Referenzmesswerte gemäß einer vorbestimmten Metrik.

3. Verfahren nach Anspruch 2, wobei das Bestimmen (106) der Position des beweglichen Objekts ferner Folgendes umfasst:
Bestimmen derjenigen einem Referenzwert zugeordneten Position des beweglichen Objekts als Position des beweglichen Objekts, deren Referenzwert gemäß der Metrik eine größte Ähnlichkeit zu der Mehrzahl an Messwerten aufweist.

4. Verfahren nach Anspruch 2, wobei das Bestimmen (106) der Position des beweglichen Objekts ferner Folgendes umfasst:

Bestimmen einer Anzahl der Referenzwerte, die gemäß der Metrik eine größte Ähnlichkeit zu der Mehrzahl an Messwerten aufweisen; und
Bestimmen eines gewichteten Mittelwerts der der Anzahl der Referenzwerte zugeordneten Positionen des beweglichen Objekts als Position des beweglichen Objekts.

5. Verfahren nach Anspruch 4, wobei eine Gewichtung einer Position des beweglichen Objekts, welche einem der Anzahl der Referenzwerte zugeordnet ist, auf der Ähnlichkeit des einen der Anzahl der Referenzwerte zu der Mehrzahl an Messwerten basiert.

6. Verfahren nach einem der vorhergehenden Ansprüche, wobei das Bestimmen der Position (106) des beweglichen Objekts ferner Folgendes umfasst:
Filtern eines Kandidaten für die Position des beweglichen Objekts unter Verwendung eines Kalman-Filters, wobei das Kalman-Filter auf einem Bewegungsmodel für das bewegliche Objekt basiert.

7. Verfahren nach Anspruch 6, wobei das Filtern des Kandidaten für die Position des beweglichen Objekts Folgendes umfasst:

Bestimmen, unter Verwendung des Bewegungsmodels, einer prädizierten Position des beweglichen Objekts basierend auf vorhergehend bestimmten Positionen des beweglichen Objekts; und
Vergleichen der prädizierten Position des beweglichen Objekts mit dem Kandidaten für die Position des beweglichen Objekts.

8. Verfahren nach Anspruch 7, wobei das Filtern des Kandidaten für die Position des beweglichen Objekts ferner Folgendes umfasst:
Verwerfen des Kandidaten für die Position des beweglichen Objekts, wenn ein Unterschied zwischen der prädizierten Position des beweglichen Objekts und dem Kandidaten für die Position des beweglichen Objekts größer als ein Schwellwert ist.

9. Verfahren nach einem der vorhergehenden Ansprüche, wobei den Referenzmesswerten ferner jeweils eine Orientierung des beweglichen Objekts zugeordnet ist.

10. Verfahren nach einem der Ansprüche 1 bis 8, wobei das magnetischen Antwortfeld durch drei zueinander orthogonale Spulen erzeugt wird, und wobei die drei Spulen eingerichtet sind, bei einer identischen Orientierung relativ zu dem elektromagnetischen Erregerfeld im Wesentlichen gleiche magnetische Antwortteilfelder zu erzeugen.

11. Verfahren nach einem der Ansprüche 1 bis 8, wobei das magnetischen Antwortfeld durch drei zueinander orthogonale Spulen erzeugt wird, und wobei die drei Spulen eingerichtet sind, bei einer identischen Orientierung relativ zu dem elektromagnetische Erregerfeld voneinander unterscheidbare magnetische Antwortteilfelder zu erzeugen.

12. Verfahren nach Anspruch 11, wobei die drei Spulen unterschiedliche Resonanzfrequenzen aufweisen und/oder die jeweiligen magnetischen Antwortteilfelder der drei Spulen mit verschiedenen Codesequenzen moduliert sind.

13. Verfahren nach einem der vorhergehenden Ansprüche, wobei das Bestimmen (104) der Mehrzahl an Messwerten für das magnetische Antwortfeld Folgendes umfasst:
Normieren des für einen der Mehrzahl an vorbestimmten Messpositionen bestimmten Messwerts basierend auf der Summe der für alle der Mehrzahl an vorbestimmten Messpositionen bestimmten Messwerte.

14. Verfahren nach Anspruch 13, wobei sich die Mehrzahl an vorbestimmten Messpositionen außerhalb einer Ebene, in der das Erzeugen des elektromagnetischen Erregerfeldes stattfindet, befindet.

15. Verfahren nach einem der vorhergehenden Ansprüche, wobei einer der Referenzmesswerte basierend auf einer Geometrie eines Erregersystems, welches zum Erzeugen des elektromagnetischen Erregerfeldes verwendet wird, einer Geometrie eines Antwortsystems, welches zum Aussenden des magnetischen Antwortfeldes verwendet wird, einer Geometrie eines Messsystems, welches zum Messen des magnetischen Antwortfeldes verwendet wird, und einer Impedanz des Antwortsystems durch die Simulation bestimmt ist.

16. Verfahren nach einem der vorhergehenden Ansprüche, wobei das Verfahren ferner Folgendes umfasst:

Bestimmen auf Basis eines Frequenzdurchlaufs des elektromagnetischen Erregerfeldes, dass sich das bewegliche Objekt nicht in einem vorbestimmten Umkreis um einen Erzeugungsort des elektromagnetischen Erregerfeldes befindet;
Bestimmen einer Mehrzahl an Hilfsmesswerten an der Mehrzahl an vorbestimmten Messpositionen, wobei die Mehrzahl an Hilfsmesswerten ein magnetisches Antwortfeld eines Störobjekts an der Mehrzahl an vorbestimmten Messpositionen repräsentiert;
Schätzen einer Position des Störobjekts basierend auf einem Vergleich der Mehrzahl an Hilfsmesswerten mit den Referenzmesswerten; und
Bestimmen, unter Berücksichtigung des Störobjekts, eines aktualisierten Referenzmesswerts für eine Position, die einen vorbestimmten maximalen Abstand zu der Position des Störobjekts aufweist.

17. Verfahren nach einem der vorhergehenden Ansprüche, wobei das Verfahren ferner Folgendes umfasst:

Bestimmen einer Mehrzahl an zweiten Messwerten an der Mehrzahl an vorbestimmten Messpositionen, wobei die Mehrzahl an zweiten Messwerten ein zweites magnetisches Antwortfeld eines zweiten beweglichen Objekts an der Mehrzahl an vorbestimmten Messpositionen repräsentiert, und wobei eine erste Resonanzfrequenz eines ersten Antwortsystems des beweglichen Objekts, welches zum Aussenden des magnetischen Antwortfeldes verwendet wird, von einer zweiten Resonanzfrequenz eines zweiten Antwortsystems des zweiten beweglichen Objekts, welches zum Aussenden des zweiten magnetischen Antwortfeldes verwendet wird, verschieden ist; und
Bestimmen der Position des zweiten beweglichen Objekts basierend auf einem Vergleich der Mehrzahl an zweiten Messwerten mit den Referenzmesswerten.

18. Verfahren nach einem der Ansprüche 1 bis 16, wobei das Verfahren ferner Folgendes umfasst:

Bestimmen einer Mehrzahl an zweiten Messwerten an der Mehrzahl an vorbestimmten Messpositionen, wobei die Mehrzahl an zweiten Messwerten ein zweites magnetisches Antwortfeld eines zweiten beweglichen Objekts an der Mehrzahl an vorbestimmten Messpositionen repräsentiert, und wobei das magnetische Antwortfeld und das zweite magnetische Antwortfeld mit zueinander orthogonalen Codes moduliert sind; und
Bestimmen der Position des zweiten beweglichen Objekts basierend auf einem Vergleich der Mehrzahl an zweiten Messwerten mit den Referenzmesswerten.

**19.** Vorrichtung (310) zum Bestimmen einer Position eines beweglichen Objekts (320) im Raum zur Lokalisierung dieses Objekts, umfassend:

ein Erregermodul (311), das eingerichtet ist, ein elektromagnetisches Erregerfeld (330) zu erzeugen, wobei das elektromagnetische Erregerfeld (330) eingerichtet ist, das bewegliche Objekt (320) zum Ausprägen eines magnetischen Antwortfeldes (340) anzuregen; und
ein Messmodul (312), das eingerichtet ist, eine Mehrzahl an Messwerten für das magnetische Antwortfeld (340) durch Messen des magnetischen Antwortfeldes (340) an einer Mehrzahl an vorbestimmten Messpositionen zu bestimmen; **gekennzeichnet durch** ein Auswertemodul (313), das eingerichtet ist, die Position des beweglichen Objekts (320) basierend auf einem Vergleich der Mehrzahl an Messwerten mit Referenzmesswerten zu bestimmen, wobei den Referenzmesswerten jeweils eine Position des beweglichen Objekts (320) zugeordnet ist, und wobei die Referenzmesswerte jeweils durch eine Simulation bestimmt sind.

**20.** System (300), umfassend:

zumindest ein bewegliches Objekt (340), das eingerichtet ist, als Reaktion auf ein elektromagnetisches Erregerfeld (330) ein magnetisches Antwortfeld (340) auszuprägen; und
eine Vorrichtung (310) zum Bestimmen einer Position eines beweglichen Objekts gemäß Anspruch 19.

**Claims**

**1.** A method (100) for determining a position of a movable object in space for locating this object, comprising:

generating (102) an electromagnetic exciter field, the electromagnetic exciter field being configured to excite the movable object to develop a magnetic response field; and
determining (104) a plurality of measurement values for the magnetic response field by measuring the magnetic response field at a plurality of predetermined measurement positions;
**characterized by**
determining (106) the position of the movable object based on a comparison of the plurality of measurement values with reference measurement values, wherein one position of the movable object is allocated to each of the reference measurement values, and wherein the reference measurement values are each determined by a simulation.

**2.** The method according to claim 1, wherein determining (106) the position of the movable object further comprises: determining a similarity of one of the plurality of measurement values to one of the reference measurement values according to a predetermined metric.

**3.** The method according to claim 2, wherein determining (106) the position of the movable object further comprises: determining the one position of the movable object allocated to a reference value as the position of the movable object, whose reference value has a greatest similarity to the plurality of measurement values according to the metric.

**4.** The method according to claim 2, wherein determining (106) the position of the movable object further comprises:

determining a number of reference values which have a greatest similarity to the plurality of measurement values according to the metric; and
determining a weighted average value of the positions of the movable object allocated to the number of the reference values as the position of the movable object.

**5.** The method according to claim 4, wherein weighting a position of the movable object allocated to one of the number of reference values is based on the similarity of the one of the number of reference values to the plurality of measurement values.

**6.** The method according to any of the preceding claims, wherein determining the position (106) of the movable object further comprises:
filtering a candidate for the position of the movable object using a Kalman filter, wherein the Kalman filter is based on a movement model for the movable object.

**7.** The method according to claim 6, wherein filtering the candidate for the position of the movable object further comprises:

determining, using the movement model, a predicted position of the movable object based on previously determined positions of the movable object; and
comparing the predicted position of the movable object to the candidate for the position of the movable object.

**8.** The method according to claim 7, wherein filtering the candidate for the position of the movable object further comprises:
discarding the candidate for the position of the movable object if a difference between the predicted position of the movable object and the candidate for the position of the movable object is greater than a threshold value.

**9.** The method according to any of the preceding claims, wherein an orientation of the movable object is further allocated to each of the reference measurement values.

**10.** The method according to any of claims 1 to 8, wherein the magnetic response field is generated by three orthogonal coils, and wherein the three coils are configured, in case of an identical orientation relative to the electromagnetic exciter field, to generate substantially equal magnetic response sub-fields.

**11.** The method according to any of claims 1 to 8, wherein the magnetic response field is generated by three orthogonal coils, and wherein the three coils are configured, in case of an identical orientation relative to the electromagnetic exciter field, to generate distinguishable magnetic response sub-fields.

**12.** The method according to claim 11, wherein the three coils have different resonance frequencies and/or the respective magnetic response sub-fields of the three coils are modulated with different code sequences.

**13.** The method according to any of the preceding claims, wherein determining (104) the plurality of measurement values for the magnetic response field further comprises:
normalizing the measurement value determined for one of the plurality of predetermined measurement positions based on the sum of the measurement values determined for all of the plurality of predetermined measurement positions.

**14.** The method according to claim 13, wherein the plurality of predetermined measurement positions is located outside a plane in which generating the electromagnetic exciter field takes place.

**15.** The method according to any of the preceding claims, wherein one of the reference measurement values is determined by the simulation based on a geometry of an exciter system used for generating the electromagnetic exciter field, a geometry of a response system used for emitting the magnetic response field, a geometry of a measurement system used for measuring the magnetic response field and an impedance of the response system.

**16.** The method according to any of the preceding claims, the method further comprising:

determining, on the basis of a frequency sweep of the electromagnetic exciter field, that the movable object is not located within a predetermined radius around a location of generation of the electromagnetic exciter field;
determining a plurality of auxiliary measurement values at the plurality of predetermined measurement positions, wherein the plurality of auxiliary measurement values represent a magnetic response field of an interference object at the plurality of predetermined measurement positions;
estimating a position of the interference object based on a comparison of the plurality of auxiliary measurement values to the reference measurement values; and
determining, taking into account the interference object, an updated reference measurement value for a position which has a predetermined maximum distance to the position of the interference object.

**17.** The method according to any of the preceding claims, the method further comprising:

determining a plurality of second measurement values at the plurality of predetermined measurement positions, wherein the plurality of second measurement values represent a second magnetic response field of a second movable object at the plurality of predetermined measurement positions, and wherein a first resonance frequency of a first response system of the movable object used for emitting the magnetic response field is different from a second resonance frequency of a second response system of the second movable object used for emitting the second magnetic response field; and

determining the position of the second movable object based on a comparison of the plurality of second measurement values with the reference measurement values.

18. The method according to any of claims 1 to 16, the method further comprising:

determining a plurality of second measurement values at the plurality of predetermined measurement positions, wherein the plurality of second measurement values represent a second magnetic response field of a second movable object at the plurality of predetermined measurement positions, and wherein the magnetic response field and the second magnetic response field are modulated with codes which are orthogonal to each other; and determining the position of the second movable object based on a comparison of the plurality of second measurement values with the reference measurement values.

19. An apparatus (310) for determining a position of a movable object (320) in space for locating this object, comprising:

an exciter module (311) configured to generate an electromagnetic exciter field (330), the electromagnetic exciter field (330) being configured to excite the movable object (320) to develop a magnetic response field (340); and

a measurement module (312) configured to determine a plurality of measurement values for the magnetic response field (340) by measuring the magnetic response field (340) at a plurality of predetermined measurement positions; **characterized by**

an evaluation module (313) configured to determine the position of the movable object (320) based on a comparison of the plurality of measurement values with reference measurement values, wherein one position of the movable object (320) is allocated to each of the reference measurement values, and wherein the reference measurement values are each determined by a simulation.

20. A system (300), comprising:

at least one movable object (340) configured to develop a magnetic response field (340) as a reaction to an electromagnetic exciter field (330); and

an apparatus (310) for determining a position of a movable object according to claim 19.

## Revendications

1. Procédé (100) pour déterminer une position d'un objet mobile dans l'espace pour localiser cet objet, comprenant le fait de :

générer (102) un champ électromagnétique excitateur, le champ électromagnétique excitateur étant configuré pour exciter l'objet mobile afin de développer un champ de réponse magnétique ; et

déterminer (104) une pluralité de valeurs mesurées pour le champ de réponse magnétique en mesurant le champ de réponse magnétique à une pluralité de positions de mesure prédéterminées ; **caractérisé par** le fait de déterminer (106) la position de l'objet mobile sur la base d'une comparaison de la pluralité de valeurs mesurées avec des valeurs mesurées de référence, les valeurs mesurées de référence étant chacune associée à une position de l'objet mobile, et les valeurs mesurées de référence chacune étant déterminée par une simulation.

2. Procédé selon la revendication 1, dans lequel le fait de déterminer (106) la position de l'objet mobile comprend le fait de :

déterminer une similitude de l'une de la pluralité de valeurs mesurées avec l'une des valeurs mesurées de référence selon une métrique prédéterminée.

3. Procédé selon la revendication 2, dans lequel le fait de déterminer (106) la position de l'objet mobile comprend en outre le fait de :

déterminer, en tant que position de l'objet mobile, cette position de l'objet mobile associée à une valeur de référence, dont la valeur de référence, selon la métrique, a une plus grande similitude avec la pluralité de valeurs mesurées.

4. Procédé selon la revendication 2, dans lequel le fait de déterminer (106) la position de l'objet mobile comprend en outre le fait de :

déterminer un nombre de valeurs de référence qui, selon la métrique, ont une plus grande similitude avec la pluralité de valeurs mesurées ; et

déterminer une valeur moyenne pondérée des positions de l'objet mobile associées au nombre de valeurs de référence en tant que la position de l'objet mobile.

5. Procédé selon la revendication 4, dans lequel une pondération d'une position de l'objet mobile qui est associée à l'une du nombre de valeurs de référence est basée sur la similitude de l'une du nombre de valeurs de référence à la pluralité de valeurs mesurées.

6. Procédé selon l'une des revendications précédentes, dans lequel le fait de déterminer la position (106) de l'objet mobile comprend en outre le fait de :
filtrer un candidat pour la position de l'objet mobile en utilisant un filtre de Kalman, le filtre de Kalman étant basé sur un modèle de mouvement pour l'objet mobile.

7. Procédé selon la revendication 6, dans lequel le fait de filtrer le candidat pour la position de l'objet mobile comprend le fait de :

déterminer, en utilisant le modèle de mouvement, une position prédite de l'objet mobile sur la base des positions précédemment déterminées de l'objet mobile ; et

comparer la position prédite de l'objet mobile avec le candidat pour la position de l'objet mobile.

8. Procédé selon la revendication 7, dans lequel le fait de filtrer le candidat pour la position de l'objet mobile comprend en outre le fait de :
éliminer le candidat pour la position de l'objet mobile si une différence entre la position prédite de l'objet mobile et le candidat pour la position de l'objet mobile est plus grande qu'un seuil.

9. Procédé selon l'une des revendications précédentes, dans lequel les valeurs mesurées de référence sont chacune associée à une orientation de l'objet mobile.

10. Procédé selon l'une des revendications 1 à 8, dans lequel le champ de réponse magnétique est généré par trois bobines mutuellement orthogonales, et dans lequel les trois bobines sont configurées pour générer essentiellement les mêmes champs partiels de réponse magnétiques avec une orientation identique par rapport au champ électromagnétique excitateur.

11. Procédé selon l'une des revendications 1 à 8, dans lequel le champ de réponse magnétique est généré par trois bobines mutuellement orthogonales, et dans lequel les trois bobines sont configurées pour générer des champs partiels de réponse magnétiques qui peuvent être distingués les uns des autres avec une orientation identique par rapport au champ électromagnétique excitateur.

12. Procédé selon la revendication 11, dans lequel les trois bobines ont des fréquences de résonance différentes et/ou les champs partiels de réponse magnétiques respectifs des trois bobines sont modulés avec des séquences de codes différentes.

13. Procédé selon l'une des revendications précédentes, dans lequel le fait de déterminer (104) la pluralité de valeurs mesurées pour le champ de réponse magnétique comprend le fait de :
normaliser la valeur mesurée déterminée pour l'une de la pluralité de positions de mesure prédéterminées sur la base de la somme des valeurs mesurées déterminées pour l'ensemble de la pluralité de positions de mesure prédéterminées.

14. Procédé selon la revendication 13, dans lequel la pluralité de positions de mesure prédéterminées est située à l'extérieur d'un plan dans lequel la génération du champ électromagnétique excitateur a lieu.

15. Procédé selon l'une des revendications précédentes, dans lequel l'une des valeurs mesurées de référence est déterminée par la simulation sur la base d'une géométrie d'un système d'excitateur qui est utilisé pour générer le champ électromagnétique excitateur, d'une géométrie d'un système de réponse qui est utilisé pour émettre le champ de réponse magnétique, d'une géométrie d'un système de mesure qui est utilisé pour mesurer le champ de réponse magnétique, et d'une impédance du système de réponse.

16. Procédé selon l'une des revendications précédentes, dans lequel le procédé comprend en outre le fait de :

déterminer sur la base d'un balayage de fréquence du champ électromagnétique excitateur que l'objet mobile n'est pas situé dans un rayon prédéterminé autour d'un emplacement de génération du champ électromagnétique excitateur ;
déterminer une pluralité de valeurs mesurées auxiliaires à la pluralité de positions de mesure prédéterminées, la pluralité de valeurs mesurées auxiliaires représentant un champ de réponse magnétique d'un objet interférant à la pluralité de positions de mesure prédéterminées ;
estimer une position de l'objet interférant sur la base d'une comparaison de la pluralité de valeurs mesurées auxiliaires avec les valeurs mesurées de référence ; et
Déterminer, en tenant compte de l'objet interférant, une valeur mesurée de référence mise à jour pour une position qui est à une distance maximale prédéterminée de la position de l'objet interférant.

17. Procédé selon l'une des revendications précédentes, dans lequel le procédé comprend en outre le fait de :

déterminer une pluralité de deuxièmes valeurs mesurées à la pluralité de positions de mesure prédéterminées, la pluralité de deuxièmes valeurs mesurées représentant un deuxième champ de réponse magnétique d'un deuxième objet mobile à la pluralité de positions de mesure prédéterminées, et dans lequel une première fréquence de résonance d'un premier système de réponse de l'objet mobile, qui est utilisé pour émettre le champ de réponse magnétique, est différente d'une deuxième fréquence de résonance d'un deuxième système de réponse du deuxième objet mobile, qui est utilisé pour émettre le deuxième champ de réponse magnétique ; et
déterminer la position du deuxième objet mobile sur la base d'une comparaison de la pluralité de deuxièmes valeurs mesurées avec les valeurs mesurées de référence.

18. Procédé selon l'une des revendications 1 à 16, dans lequel le procédé comprend en outre le fait de :

déterminer une pluralité de deuxièmes valeurs mesurées à la pluralité de positions de mesure prédéterminées, la pluralité de deuxièmes valeurs mesurées représentant un deuxième champ de réponse magnétique d'un deuxième objet mobile à la pluralité de positions de mesure prédéterminées, et dans lequel le champ de réponse magnétique et le deuxième champ de réponse magnétique sont modulés avec des codes mutuellement orthogonaux ;
déterminer la position du deuxième objet mobile sur la base d'une comparaison de la pluralité de deuxièmes valeurs mesurées avec les valeurs mesurées de référence.

19. Dispositif (310) pour déterminer une position d'un objet mobile (320) dans l'espace pour localiser cet objet, comprenant :

un module excitateur (311) qui est configuré pour générer un champ électromagnétique excitateur (330), dans lequel le champ électromagnétique excitateur (330) est configuré pour exciter l'objet mobile (320) afin de développer un champ de réponse magnétique (340) ; et
un module de mesure (312) qui est configuré pour déterminer une pluralité de valeurs mesurées pour le champ de réponse magnétique (340) en mesurant le champ de réponse magnétique (340) à une pluralité de positions de mesure prédéterminées ; **caractérisé par**
un module d'évaluation (313) qui est configuré pour déterminer la position de l'objet mobile (320) sur la base d'une comparaison de la pluralité de valeurs mesurées avec des valeurs mesurées de référence, les valeurs mesurées de référence étant chacune associée à une position de l'objet mobile (320), et les valeurs mesurées de référence étant chacune déterminée par une simulation.

20. Système (300) comprenant :

au moins un objet mobile (340) qui est configuré pour développer un champ de réponse magnétique (340) en réponse à un champ électromagnétique excitateur (330) ; et
un dispositif (310) pour déterminer une position d'un objet mobile selon la revendication 19.

Erzeugen eines elektromagnetischen
Erregerfeldes

102

Bestimmen einer Mehrzahl an
Messwerten

104

100

Bestimmen der Position des
beweglichen Objekts

106

Fig. 1

Fig. 2a

Fig. 2b

330

311

313

312

310

340

320

300

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2813114 A1
- US 2014266164 A1
- US 2010022904 A1
- US 6789043 B1
- US 7139582 B2
- US 6316934 B1
- CN 105222772 A
- US 2010271012 A1